**Europäisches Patentamt**

**European Patent Office**

**Office européen des brevets**

(19)

(11) Veröffentlichungsnummer : **0 368 954 B1**

(12) # EUROPÄISCHE PATENTSCHRIFT

(45) Veröffentlichungstag der Patentschrift :
**01.07.92 Patentblatt 92/27**

(51) Int. Cl.$^5$: **F02D 41/38, F02M 45/10**

(21) Anmeldenummer : **89905066.0**

(22) Anmeldetag : **28.04.89**

(86) Internationale Anmeldenummer :
**PCT/DE89/00274**

(87) Internationale Veröffentlichungsnummer :
**WO 89/11034 16.11.89 Gazette 89/27**

(54) **STEUERSYSTEM FÜR EINE DIESELBRENNKRAFTMASCHINE.**

(30) Priorität : **11.05.88 DE 3816165**

(43) Veröffentlichungstag der Anmeldung :
**23.05.90 Patentblatt 90/21**

(45) Bekanntmachung des Hinweises auf die
Patenterteilung :
**01.07.92 Patentblatt 92/27**

(84) Benannte Vertragsstaaten :
**DE FR GB**

(56) Entgegenhaltungen :
**EP-A-01 135 10**
**GB-A- 2 072 261**

(56) Entgegenhaltungen :
**US-A-43 273 94**
**Patent Abstracts of Japan, Band 9, Nr. 73**
**(M-368) (1796), 3. April 1985**
**Patent Abstact of Japan, Band 9, Nr. 330**
**(M-442) (2053), 25. Dezember 1985**

(73) Patentinhaber : **ROBERT BOSCH GMBH**
**Postfach 30 02 20**
**W-7000 Stuttgart 30 (DE)**

(72) Erfinder : **STÜRZ, Manfred**
**Wieselweg 4**
**W-7250 Leonberg (DE)**
Erfinder : **TAUSCHER, Joachim**
**Leibnizstr. 47**
**W-7000 Stuttgart 1 (DE)**

EP 0 368 954 B1

## Beschreibung

Die Erfindung betrifft eine Einrichtung zur elektronischen Steuerung und/oder Regelung einer Dieselbrennkraftmaschine gemäß dem Oberbegriff des Anspruchs 1.

Eine solche Einrichtung ist in der Zeitschrift "Autotechnik", Nr. 11, 1983, Seite 52 bis 53 unter der Überschrift "Elektrisch gesteuerte Pumpendüsen für schnellaufende Direkteinspritzer-Dieselmotoren" beschrieben. Offenbart ist pro Zylinder je eine Pumpendüse, bestehend aus Einspritzdüse und Magnetventil, und ferner verschiedenen Sensoren für Betriebskenngrößen der Brennkraftmaschine und einem elektronischen Steuergerät. Die Zumessung der Einspritzmenge erfolgt durch ein Magnetventil, das entsprechend den Signalen des elektronischen Steuergeräts öffnet und schließt. Dabei können der Spritzbeginn über den Zumeßbeginn und die Spritzmenge durch die Impulslänge unabhängig voneinander gesteuert werden.

Aus der DE 31 18 669 ist ein Verfahren und eine Einrichtung zur Steuerung oder Regelung einer Dieselbrennkraftmaschine bekannt, bei der die zuzumessende Kraftstoffmenge bei einer Verteilereinspritzpumpe durch ein Magnetventil gesteuert wird.

Es hat sich nun gezeigt, daß der mit den bekannten Einrichtungen erzielbare Einspritzverlauf zu störenden Verbrennungsgeräuschen führen kann.

Ferner zeigt die GB-A 20 72 261 eine Einrichtung zur Steuerung der Kraftstoffzufuhr zu einer Brennkraftmaschine. Bei dieser Einrichtung baut eine Kraftstoffpumpe in einem Vorratsbehälter den für die Einspritzung nötigen Druck auf. Von dem Vorratsbehälter gelangt der Kraftstoff über einen Logistor in den Brennraum. Der Kraftstofffluß von dem Vorratsbehälter in einen bestimmten Brennraum läßt sich mit einem Elektromagneten, der in den Logistor angeordnet ist, steuern. Bei einer Betätigung des Elektromagneten gelangt der Kraftstoff in den Brennraum. Der Logistor, der den Kraftstofffluß steuert, ist bei dieser Einrichtung auf der Hochdruckseite angeordnet. Für jeden Zylinder ist auf der Hochdruckseite ein Logistor mit zugehöriger Ansteuerung erforderlich.

Diese Einrichtung ist sehr kompliziert aufgebaut. Der Kraftstoff in dem Vorratsbehälter steht unter sehr hohem Druck und der Elektromagnet steuert den Fluß des unter sehr hohem Druck stehenden Kraftstoffs.

Der Erfindung liegt die Aufgabe zugrunde eine möglichst einfach aufgebaute Einrichtungen der eingangs genannten Art zu schaffen, bei der nur sehr geringe Geräuschemissionen auftreten. Diese Aufgabe wird durch die Merkmalskombination des Hauptanspruchs gelöst.

Vorteile der Erfindung

Die erfindungsgemäße Einrichtung zur Steuerung und/oder Regelung einer Brennkraftmaschine mit den Merkmalen des Hauptanspruchs hat gegenüber dem beschriebenen Stand der Technik den Vorteil, daß mittels einer sehr einfach aufgebauten Einrichtung der Elementraumdruck entsprechend den Anforderungen der Brennkraftmaschine elektronisch gesteuert werden kann. Dadurch wird die Geräuschemission der Brennkraftmaschine wesentlich vermindert.

Weitere vorteilhafte Ausgestaltungen und Weiterbildungen der Erfindung sind durch die in den Unteransprüchen aufgeführten Maßnahmen möglich.

Zeichnung

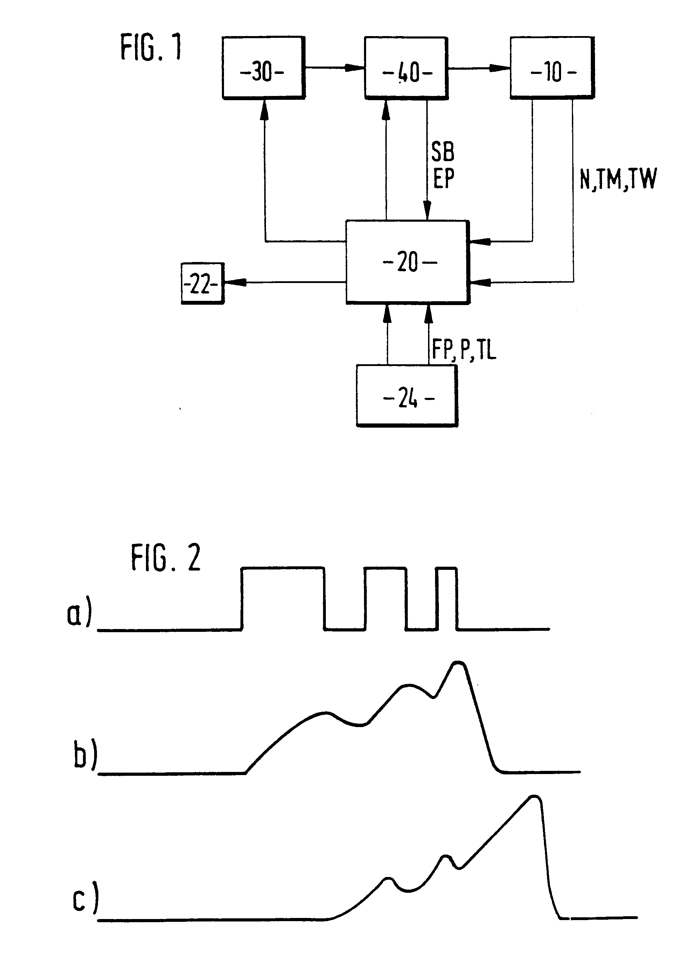

Die Erfindung wird nachstehend anhand der Zeichnungen erläutert. In Figur 1 ist der schematische Aufbau der Einrichtung dargestellt. Figur 2 zeigt an einem Beispiel den Zusammenhang zwischen dem Ansteuersignal des Magnetventils, dem Elementraumdruck EP und dem Nadelhub eines Einspritzventils.

Beschreibung des Ausführungsbeispiels

In Figur 1 ist mit 10 eine Brennkraftmaschine bezeichnet. Mittels verschiedener Sensoren werden Betriebsparameter wie Drehzahl N, Temperatur dar Brennkraftmaschine TM, Kühlwassertemperatur TW und weitere Betriebskenngrößen der Brennkraftmaschine erfaßt und an das Steuergerät 20 weitergeleitet. Dieses erhält von weiteren Sensoren 24 Signale bezüglich der Fahrpedalstellung FP, Ladedruck P, Lufttemperatur TL und weiterer Kenngrößen. Ferner erreichen das Steuergerät Signale, die die Einspritzung charakterisieren, wie z.B. Spritzbeginn, Kraftstoffmenge und Elementraumdruck EP. Das Steuergerät erzeugt Ausgangssignale zur Ansteuerung der Einspritzpumpe 40, z.B. zur Ansteuerung des Stellglieds des Pumpenkolbens, und des Magnetventiles 30, des weiteren können vom Steuergerät 20 weitere Einrichtungen 22 wie Glühkerzen oder die Abgasrückführung angesteuert werden. Das Magnetventil 30 öffnet und schließt entsprechend den Ansteuersignalen und mißt den Kraftstoff taktweise dem Pumpenarbeitsraum der Kraftstoffpumpe 40 zu. Von dieser wird der Kraftstoff in die Brennkraftmaschine 10 gefördert.

Diese Einrichtung kann so ausgelegt werden, daß die Ansteuersignale für alle Magnetventile gleichzeitig berechnet werden, oder sie kann so ausgelegt werden, daß die Ansteuersignale für jedes Magnetventil getrennt berechnet werden. In diesem Fall kann mit der Einrichtung eine zylinderspezifische Regelung der Brennkraftmaschine erfolgen.

Figur 2a zeigt den zeitlichen Verlauf des Ansteuersignals eines Zumeßzyklusses für das Magnetventil 30, Figur 2b den Elementraumdruck EP und Figur 2c den Nadelhub der in etwa dem Einspritzverlauf, den zeitlichen Verlauf der eingespritzten Kraftstoffmenge pro festem Zeitraum entspricht. Sowohl die Taktfrequenz als auch das Tastverhältnis sind in weiten Grenzen variabel. Der Druckaufbau im Pumpenarbeitsraum (Elementraum) hängt dabei von der Taktfrequenz und dem Tastverhältnis ab. Durch mehrmaliges Antakten der Magnetventile pro Zumeßzyklus kann der Druckaufbau im Elementraum in weitem Grenzen beeinflußt werden. Mittels eines ersten langen Ansteuerimpuls wird ein gleichmäßiger Druckaufbau erreicht, dadurch wird ein stabiler Spritzbeginn erzielt. Dies ist unter anderem für geringe Geräuschemission notwendig. Durch entsprechendes Antakten kann eine lange Spritzdauer erreicht werden, dies bringt vor allem im Leerlauf Vorteile. Die Taktfrequenz und das Tastverhältnis bestimmen den Verlauf des Druckaufbaus im Elementraum und damit auch den Einspritzverlauf. Da die Ansteuersignale für das Magnetventil abhängig von Betriebskenngrößen ermittelt werden, kann der Spritzverlauf betriebskenngrößenabhängig gesteuert oder geregelt werden. Es kann abhängig von Betriebsbedingungen wie Ladedruck PL, Ladelufttemperatur TL, Drehzahl N und Last für jeden Betriebszustand ein bestimmtes Tastverhältnis und eine bestimmte Taktfrequenz oder eine bestimmte Abfolge von unterschiedlichen Tastverhältnissen und/oder Taktfrequenzen vorgegeben werden.

Es ist möglich im Leerlauf, abhängig von der Temperatur der Brennkraftmaschine, durch mehrmaliges Antakten mit kleinem Tastverhältnis eine lange Spritzdauer zu verwirklichen.

Es kann aber auch ein bestimmter Elementraumdruck oder ein bestimmter zeitlicher Verlauf des Elementraumdrucks abhängig von Betriebskenngrößen, vorgegeben werden. Das Magnetventil dient dann als Stellglied einer Regelung des Elementraumdrucks.

**Patentansprüche**

1. Einrichtung zur Regelung oder Steuerung einer Dieselbrennkraftmaschine mit einer Kraftstoffeinspritzeinrichtung, bei der der Kraftstoff mittels eines electronisch ansteuerbaren Ventils einem Pumpenarbeitsraum zugemessen wird, und die Ansteuerung des Ventils die Einspritzdauer und/oder den Einspritzzeitpunkt beeinflußt, dadurch gekennzeichnet , daß das Ventil pro Arbeithub der Pumpe taktweise angesteuert wird, wobei der Arbeitshub die Einspritzung unmittelbar verursacht und wobei der Elementraumdruck (Druck im Pumpenarbeitsraum) mit dem Ventil auf vorgegeben Sollwerte regelbar ist.

2. Einrichtung nach Anspruch 1, dadurch gekennzeichnet, daß der Sollwert des Elementraumdrucks von Betriebskenngrößen abhängig vorgegeben wird.

3. Einrichtung nach Anspruch 1, dadurch gekennzeichnet, daß die Taktfrequenz und das Tastverhältnis des Ansteuersignals des Ventils von wenigstens einer Betriebskenngröße Abhängen.

4. Einrichtung nach einem der Ansprüche 1 bis 3, dadurch gekennzeichnet, daß es sich bei den Betriebskenngrößen um wenigstens eine der Größen Motordrehzahl (N), Temperatur der Ladeluft (TL), Last oder Ladedruck (PL) handelt.

5. Einrichtung nach wenigstens einer der vorhergehenden Ansprüche, dadurch gekennzeichnet, daß der erste Ansteuerzeitraum jedes Zumeßzyklusses länger als jeder weitere Ansteuerzeitraum desselben Zumeßzyklusses ist.

6. Einrichtung nach wenigstens einer der Ansprüche 1 bis 4, dadurch gekennzeichnet, daß im Leerlauf das Ansteuersignal eine kleineres Tastverhältnis aufweist als im Normalbetrieb.

7. Einrichtung nach wenigstens einem der vorherigen Ansprüche, dadurch gekennzeichnet, daß die Ventile zylinderspezifisch angesteuert werden.

**Claims**

1. Device for the closed-loop or open-loop control of a diesel internal combustion engine having a fuel injection device in which the fuel is metered, by means of an electronically activatable valve, to a pump working space and the activation of the valve affects the injection duration and/or the injection timing, characterised in that the valve is activated pulsewise per working stroke of the pump, whereby the working stroke directly causes the injection and whereby the element space pressure (pressure in the pump working space) can be closed-loop controlled to specified required values by means of the valve.

2. Device according to Claim 1, characterised in that the required value of the element space pressure is specified as a function of operating parameters.

3. Device according to Claim 1, characterised in that the pulse frequency and the pulse/space ratio of the valve activation signal depend on at least one operating parameter.

4. Device according to one of Claims 1 to 3, characterised in that the operating parameters involve at least one of the parameters engine speed (N), temperature of the boost air (TL), load or boost pressure (PL).

5. Device according to at least one of the preceding claims, characterised in that the first activation interval of each metering cycle is longer than any further activation interval of the same metering cycle.

6. Device according to at least one of Claims 1 to 4, characterised in that the activation signal has a smaller pulse/space ratio at idle than during normal operation.

7. Device according to at least one of the preceding claims, characterised in that the valves can be cylinder-specifically activated.

## Revendications

1. Installation de régulation de commande d'un moteur à combustion interne Diesel avec une injection de carburant dans laquelle le carburant est dosé vers la chambre de la poupe par une vanne à commande électronique et la commande de la vanne influence la durée de l'injection et/ou l'instant de l'injection, installation caractérisée en ce que la vanne est commandé en cadence pour chaque course de fonctionnement de la pompe et la course de fonctionnement provoque directement l'injection et la pression du volume élémentaire (pression dans le volume de travail de la pompe) est réglée par la vanne suivant une valeur de consigne prédéterminée.

2. Installation selon la revendication 1, caractérisée en ce que la valeur de consigne de la pression du volume élémentaire est prédéterminée selon les caractéristiques de fonctionnement.

3. Installation selon la revendication 1, caractérisée en ce que la fréquence de cadence et le rapport de travail du signal de commande de la vanne dépendent d'au moins une grandeur caractéristique de fonctionnement.

4. Installation selon l'une des revendications 1 à 3, caractérisée en ce que les grandeurs de fonctionnement sont au moins l'une des grandeurs : vitesse de rotation du moteur (N), température de l'air d'alimentation (TL), charge ou pression de charge (PL).

5. Installation selon au moins l'une des revendications précédentes, caractérisée en ce que le premier intervalle de commande de chaque cycle de dosage est plus long que tout autre intervalle de commande du même cycle de dosage.

6. Installation selon au moins l'une des revendications 1 à 4, caractérisée en ce qu'au ralenti, le signal de commande présente un rapport de travail plus petit qu'en fonctionnement normal.

7. Installation selon au moins l'une des revendications précédentes, caractérisée en ce que les vannes sont commandées de manière spécifique pour chaque cylindre.

FIG. 1

FIG. 2